**Europäisches Patentamt**

**European Patent Office**

**Office européen des brevets**

(19)

(11) Veröffentlichungsnummer: **0 185 791**
**B1**

(12) **EUROPÄISCHE PATENTSCHRIFT**

(45) Veröffentlichungstag der Patentschrift:
02.08.89

(51) Int. Cl.⁴: **H 02 K 9/19**, H 02 K 49/04

(21) Anmeldenummer: **84116281.1**

(22) Anmeldetag: **24.12.84**

(54) Verfahren zum Kühlen einer Wirbelstrombremse.

(43) Veröffentlichungstag der Anmeldung:
02.07.86 Patentblatt 86/27

(45) Bekanntmachung des Hinweises auf die Patenterteilung:
02.08.89 Patentblatt 89/31

(84) Benannte Vertragsstaaten:
AT DE FR GB IT

(56) Entgegenhaltungen:
DE-A-1 488 525
DE-C-354 806
US-A-2 386 701
US-A-2 414 532

(73) Patentinhaber: **CARL SCHENCK AG,**
**Landwehrstrasse 55 Postfach 40 18, D-6100**
**Darmstadt (DE)**

(72) Erfinder: **Dodt, Hans- Walter, An der Buche 12,**
**D-6109 Mühltal (DE)**

(74) Vertreter: **Dallhammer, Herbert, Dipl.- Ing., CARL**
**SCHENCK AG Patentabteilung Postfach 4018**
**Landwehrstrasse 55, D-6100 Darmstadt (DE)**

EP 0 185 791 B1

## Beschreibung

Die Erfindung betrifft ein Verfahren zum Kühlen einer durch Wirbelströme aufgeheizten Gehäuseinnenwand einer Wirbelstromleistungsbremse mit einem Kühlmedium und eine Wirbelstromleistungsbremse zur Durchführung des Verfahrens.

Wirbelstrombremsen werden zur Untersuchung von Kraftmaschinen eingesetzt. Hierbei wird die von den Kraftmaschinen abgegebene Leistung mittels Wirbelstrom in dem Bremsaggregat in Wärme umgewandelt. Zufolge der Wirbelströme heizt sich das gesamte Bremsaggregat auf, und es muß dafür Sorge getragen werden, daß die auftretende Wärme abgeführt wird.

Die bisherigen Ausführungen von Wirbelstrombremsen besitzen allgemein den Nachteil, daß sie bei hohen Dauerbelastungen zufolge Nichtabführbarkeit der auftretenden Wärme nur begrenzt einsetzbar sind. Zufolge des schlechten Wärmeübergangs, hervorgerufen durch die Form der Kühlkanäle, und durch die in den Kühlkanälen herrschende Strömungsgeschwindigkeit treten derart hohe Temperaturunterschiede zwischen rotorseitiger Innenwand der Bremse und der Außenwand auf, daß sich die die Kühlflüssigkeit führenden Bauteile plastisch verformen. Das kann zum Festgehen der Wirbelstrombremse führen oder die Temperatursteigerung infolge Verformung kann nach einer gewissen Zeit bis in den Bereich der Lagerung vordringen und dort die zugelassene Lagertemperatur überschreiten. Durch wiederholte plastische Verformung bei relativ hoher Belastung treten in aufgeheizten Zonen nach relativ kurzem Betrieb Risse auf, die zum Kühlmittelaustritt in den Innenraum der Maschine und damit zum Unbrauchbarwerden führen.

Durch die US-PS-2 386 701 ist eine Wirbelstromleistungsbremse bekannt geworden, bei der zur Kühlung der Maschine von einem Verteiler aus durch Rohre geleitetes Kühlwasser in seinem Verlauf bis zum Austritt aus der Wirbelstromleistungsbremse immer stärker aufgeheizt wird, was zwangsläufig zu einer Verformung des Körpers führt. Die US-PS-2 414 532 betrifft die Kühlung einer gekapselten elektrischen Maschine im Sinne eines Wärmetauschers, wobei Kühlwasser zur Kühlung der in der Maschine enthaltenen Kühlluft verwendet wird.

Ausgehend hiervon liegt der Erfindung die Aufgabe zugrunde, zwischen Ein- und Austritt der zu kühlenden Wirbelstrombremsenzone eine gleichmäßige Wärmeabfuhr bei gleichem Wärmeübergang zwischen Kühlmedium und zu kühlendem Bauteil zu erreichen.

Diese Aufgabe wird durch die kennzeichnenden Merkmale des Anspruchs 1 gelöst. Durch die Vorgabe gleicher Strömungsgeschwindigkeit des Kühlmediums im Ein- und Austritt des zu kühlenden Abschnitts wird ein gleichförmiger Wärmeübergang und eine gleichmäßige Wärmeabfuhr erreicht, so daß örtliche Überhitzungen an dem durch die Wirbelströme aufgeheizten Material der Wirbelstrombremse auch bei Dauerbetrieb eindeutig vermieden werden. Durch die Erfindung wird somit ein Verfahren offenbart, welches gestattet, bei vorgegebener Größe einer Wirbelstrombremse deren Lebensdauer zu erhöhen.

Eine besonders geeignete Wirbelstrombremse zur Durchführung des Verfahrens mit Anschlußflanschen für zu untersuchende Kraftmaschinen mit einer im magnetisierbarem Teil angeordneten Ständerwicklung als Erreger und einem aus magnetisierbarem Material bestehenden Rotor und um den Rotor angeordneten Kühlkanälen sowie einer Kühlmediumzu- und -abführung zeichnet sich durch die im Kennzeichen des Anspruchs 2 unter Schutz gestellten Ausgestaltung aus. Insbesondere durch die Führung der Innenwände der Ein- und Austrittsräume und deren Versetzung um 180° gegeneinander strömt das Kühlmedium mit gleicher Geschwindigkeit in den zu kühlenden Bereich ein und wird aus diesem auch mit der selben Geschwindigkeit abgeführt, so daß eine gleichförmige Wärmeabfuhr bewirkt wird. Als eine erfinderische Ausgestaltung wird es hierbei angesehen, daß Ein- und Austrittsraum, ausgehend vom größten Abstand zwischen zylindrischer Außenwand und der Innenwand, einen spiraligen Verlauf von 0° bis 180° und einen spiraligen Verlauf von 360° bis 180° aufweisen, also aus zwei Teilspiralen zusammengesetzt sind. Als Kühlmittel können sowohl gasförmige als auch flüssige Medien treten.

Gemäß kennzeichnendem Merkmal des Anspruchs 3 wird eine Ausgestaltung der Kühlkanäle unter Schutz gestellt, bei der die Forderung nach einer Vielzahl von relativ kurzen Kühlkanälen mit relativ großem Gesamtquerschnitt erfüllt wird.

Zur weiteren Verbesserung der Wärmeabfuhr wird gemäß Anspruch 4 im Bereich der radialen Innenwand der Wirbelstrombremse gleichmäßige Wanddicke vorgeschlagen.

Die Ansprüche 5 und 6 stellen verschiedene Formen von Kühlkanälen unter Schutz, während in Anspruch 7 die Begrenzung eines Kühlkanals in einer Richtung unter Schutz gestellt wird.

Um die Durchflußmenge des Kühlmediums zu regeln, wird gemäß Anspruch 8 vorgeschlagen, eine Druckerhöhungspumpe für das Kühlmittel vorzusehen. Wenn die Druckerhöhungspumpe auf der Welle der Wirbelstrombremse mit angeordnet ist, wird proportional zur Drehzahl der Wirbelstrombremse die Geschwindigkeit des Kühlmittels erhöht, bei z. B. gleichbleibenden Drehmoment proportional zur Leistung. Besitzt die Druckerhöhungspumpe wie in Anspruch 9 unter Schutz gestellt, einen regelbaren Eigenantrieb, so läßt sich der Wärmeübergang nach der Leistung regeln.

Anspruch 10 stellt eine Ausgestaltung der Erfindung unter Schutz, bei der zwischen Ablauf und Zulauf ein Kühler angeordnet ist, und Anspruch 11, daß in weiterer erfinderischer Ausgestaltung ein temperaturgeregelter Ausfluß zwischen Ab- und Zulauf vorhanden ist. Hiermit läßt sich ein Kreislaufbetrieb des Kühlmediums erreichen, ohne daß unzulässig hohe Temoeraturen im zu kühlenden Bereich der Wirbelstrombremse auftreten.

Die Kühlung der Wirbelstrombremse kann weiter optimiert werden durch Regelung des erfindungsgemäßen Eigenantriebs der Druckerhöhungspumpe.

Anspruch 12 erteilt eine Lehre dahin, wie Kühlmittelverlust ausgeglichen werden kann.

Die Ansprüche 13 und 14 zeigen einen Weg auf, wie durch Systemdruckerhöhung eine optimale Wärmeabfuhr aus dem zu kühlenden Bereich der Wirbelstrombremse erreicht wird.

In der nachfolgenden Zeichnung wird die Erfindung näher erläutert. Es zeigt in schematischer Darstellung:

Figur 1 einen Schnitt durch eine Wirbelstrombremse bekannter Bauart

Figur 2 einen Kühlkanal zur Kühlung der Wirbelstrombremse bekannter Bauart nach Figur 1

Figur 3 einen Schnitt durch eine erfindungsgemäße Wirbelstrombremse

Figur 4a, 4b Ansichten der Kühlkanal-Ein- und Austritte

Figur 5 einen geschlossenen Kühlkreislauf.

Für dieselben Bauteile werden in den einzelnen Figuren dieselben Bezugsziffern verwendet.

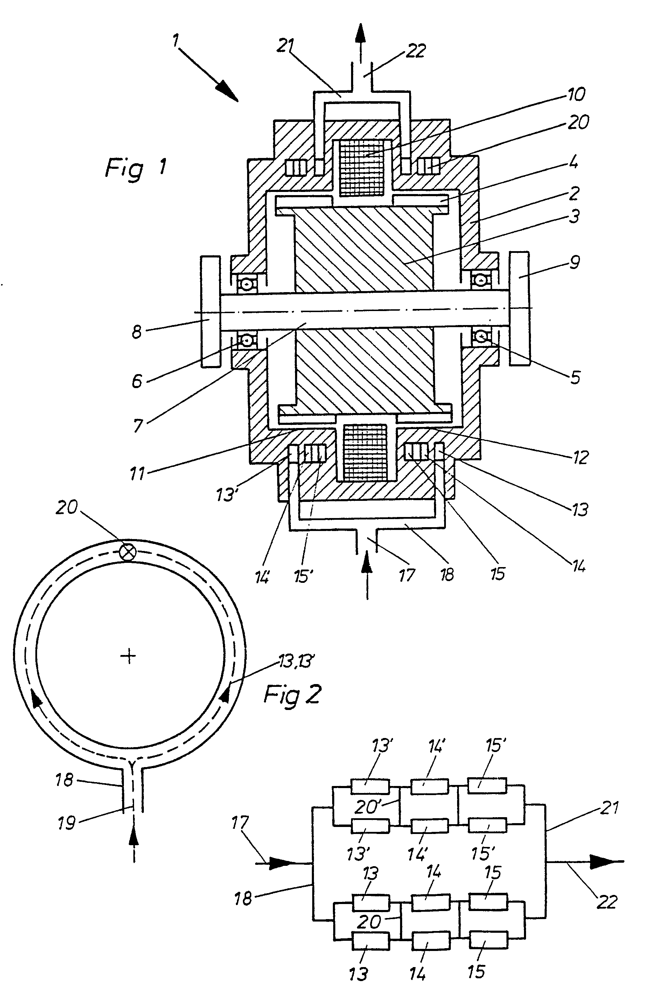

Gemäß Figur 1 sind in einem pendelnd aufgehängten Gehäuse 2 einer Wirbelstrombremse 1 ein Polkörper 3, der an seinem Umfang Zähne 4 besitzt, auf einer in Kugellagern 5, 6 gelagerten Welle 7 angeordnet. Die Welle 7 ist mit Anschlußflanschen 8, 9 versehen, an die die zu untersuchende Kraftmaschine angekoppelt werden kann.

Dem Umfang des Polkörpers 3 gegenüber ist im Gehäuse 2 eine feststehende Erregerwicklung 10 vorgesehen, die von Gleichstrom durchflossen wird. Hierdurch entsteht ein magnetisches Feld, das an den Zähnen 4 des Polkörpers 3 stationär ist. Bei Rotation des Polkörpers 3 zufolge einer mit dem Anschlußflansch 9 verbundenen Kraftmaschine läuft das stationäre Feld mit um und in den die Zähne des Polkörpers 3 umgebenden Innenwänden 11, 12 des Gehäuses 2 pulsiert das magnetische Feld mit der Frequenz der vorbeilaufenden Zähne 4. Hierdurch entstehen Wirbelströme in diesen Wänden. Die hierdurch erzeugte Wärme an den Innenwänden wird über Kühlkanäle 13 - 15 für die rechte Seite der Wirbelstromleistungsbremse und 13' - 15' für die linke Seite der Wirbelstromleistungsbremse durch ein Kühlmedium 19 abgeführt.

Das Kühlmedium 19 strömt über einen Einlaß 17 und eine Verteilungsleitung 18 in die Kühlkanäle der rechten bzw. linken Seite der Wirbelstromleistungsbremse.

Der Strömungsverlauf des Kühlmediums 19 wird anhand der Figur 2 näher erläutert. Über die Verteilungsleitung 18 strömt ein Teil des Kühlmediums in Richtung des Kühlkanals 13 und der andere Teil des Kühlmediums in Richtung des Kühlkanals 13'. Im Kühlkanal 13 bzw. 13' wird das Kühlmedium noch einmal in zwei Teilströme aufgeteilt und zufolge des durch eine Pumpe erzeugten Förderdrucks bis zu einer übergangsöffnung 20 transportiert und von dieser Übergangsöffnung 20 bzw. 20' in den nächsten Ring des Kühlkanals 14 bzw. 14' übergeleitet, wieder umgeführt und weitergeleitet an den Kühlkanal 15 bzw. 15' und von dort über eine Zusammenführleitung 21 in aufgeheiztem Zustand aus dem Auslaß 22 entlassen.

Durch die Führung des Kühlmediums in den ringförmigen Kühlkanälen 13 - 15 bzw. 13' - 15' wird das Gehäuse 2 im Bereich der Innenwände 11, 12 in ungleichmäßiger Weise gekühlt und zufolge der Größe der Kühlkanäle, bei denen die Gefahr des Zusetzens auftritt, was zu einer verminderten Kühlung führt, das Kühlergebnis weiter verringert. Da die Temperaturen an den Innenwänden 11, 12 beträchtlich höher sind als an den Außenwänden des Gehäuses 2, ist es verständlich, daß zufolge derartiger ringförmiger Kühlkanäle ein Verziehen des Gehäuses bei längerem Betrieb stattfindet. Dies führt bei extremer Belastung derartiger Wirbelstromleistungsbremsen auch zum Verziehen des Gehäuses, was letztlich zu Rissen in den die Kühlflüssigkeit führenden Bauteilen oder zum Festgehen der Wirbelstrombremse führt.

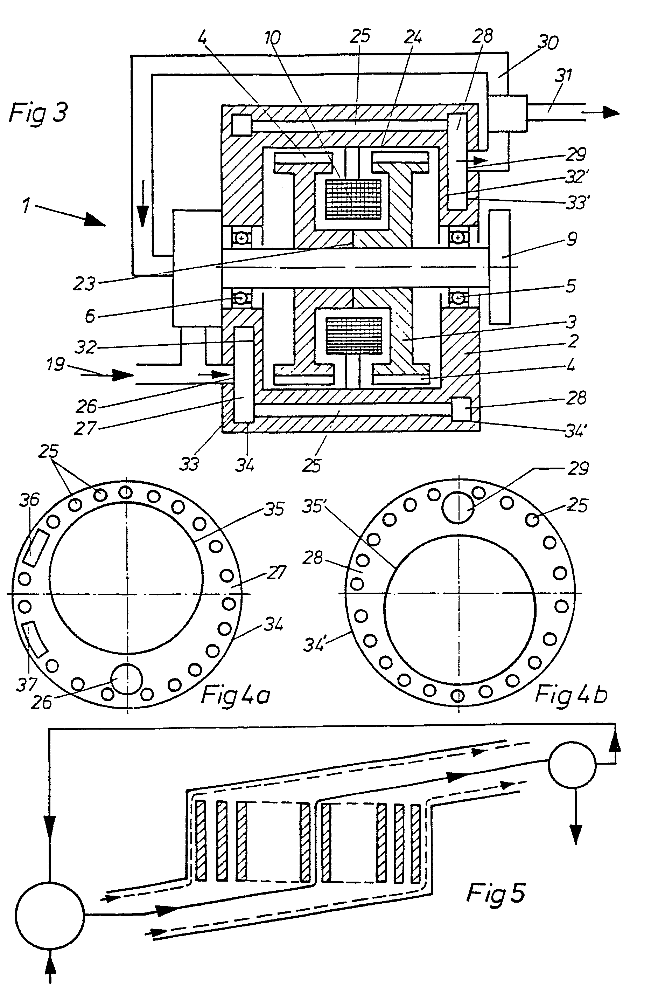

Figur 3 stellt nunmehr die erfindungsgemäße Wirbelstromleistungsbremse schematisch dar. Im Gehäuse 2 der Wirbelstromleistungsbremse 1 ist der Polkörper 3 ebenfalls mit Zähnen 4 versehen und mittels Kugellagern 5, 6 gelagert. Die Wirbelstromleistungsbremse 1 besitzt ebenfalls einen Anschlußflansch 9 an dem eine zu untersuchende Kraftmaschine anschließbar ist. Ebenso besitzt die Wirbelstromleistungsbremse eine Erregerwicklung 10, die in den Polkörper 3 hineinragt. Durch Teilen des Polkörpers 3 im Bereich 23 wird erreicht, daß die Zähne 4 die Erregerwicklung 10 ebenfalls mit umschließen. Lediglich im Bereich der Befestigung der Erregerwicklung 10 am Gehäuse 2 sind die Zähne 4 unterbrochen. Die Funktion der Wirbelstromleistungsbremse wurde bereits in Figur 1 erläutert.

Gemäß Figur 3 handelt es sich um eine geschlossene zylindrische Innenwand 24, an der im geringen Abstand Zähne 4 des Polkörpers 3 entlanglaufen. Die sich wie oben näher erläutert aufheizende zylindrische Innenwand 24 wird durch axial verlaufende gerade Kühlkanäle 25, die im zylindrischen Teil des Gehäuses 2 verlaufen, umgeben. Die geraden Kühlkanäle 25 sind, wie aus der Figur 4a und 4b entnehmbar, am Umfang des zylindrischen Teils des Gehäuses 2 gleichmäßig verteilt.

Das Kühlmedium 19 tritt über eine Eintrittsöffnung 26 (vergleiche auch Figur 4a) in einen Eintrittsraum 27 ein und fließt über die geraden Kühlkanäle 25 zu einem Austrittsraum 28 und von dort über eine Austrittsöffnung 29 entweder über eine Ringleitung 30 zurück zur Eintrittsöffnung 26 oder über einen Auslaß 31 aus.

Der Eintrittsraum 27 und der Austrittsraum 28 werden gebildet von Stirnwänden 32, 32' des Wirbelstromleistungsbremsengehäuses und von Deckflächen 33, 33', die in den Leistungsbremsen mit integriert sind und die die Eintrittsöffnung 26 bzw. Austrittsöffnung 29 tragen. Diese in axialer Richtung sich erstreckenden Begrenzungen des Eintrittsraumes und des Austrittsraumes werden in radialer Richtung zum einen von einer Zylinderwand 34 bzw. 34' als Außenwand und zum anderen von einer spiraligen Innenwand 35 bzw. 35' begrenzt.

Zufolge der erfindungsgemäßen spiraligen Ausgestaltung des Eintrittsraumes 27 und des Austrittsraumes 28, wobei die Eintrittsöffnung 26 gegenüber der Austrittsöffnung 29 um 180° verdreht angeordnet ist, ergibt eine Verteilung des Kühlmediums in diesem Raum dergestalt, daß der zu kühlende Bereich der Wirbelstromleistungsbremse von Kühlmedium durchflossen wird, daß jeder Stromfaden (vergleiche Figur 5), dem erfinderischen Verfahren gehorchend, im Ein- und Austritt des zu kühlenden Abschnitts, also im Ein- und Austritt der geraden Kühlkanäle 25, gleiche Strömungsgeschwindigkeit besitzt.

Die Kühlkanäle 25 können, wie in Figur 4a, 4b dargestellt, runde Form besitzen, sie können jedoch auch rechteckige Form besitzen oder der zylindrischen Innenwand angepaßte zylindrische Kanalwandungen aufweisen. In Figur 4a und 4b sind verschiedene erfindungsgemäße Kühlkanäle dargestellt. So ist mit der Bezugsziffer 36 ein rechteckiger Kühlkanal und mit der Bezugsziffer 37 ein gekrümmter Kühlkanal dargestellt.

Unter Wirbelstrombremse ist eine Wirbelstromleistungsbremse zu verstehen, die die Kurbelwellenleistung von Kraftmaschinen aufnimmt.

**Patentansprüche**

1. Verfahren zum Kühlen einer durch Wirbelströme aufgeheizten Gehäuseinnenwand (24) einer Wirbelstromleistungsbremse (1) mit einem Kühlmedium (19), dadurch gekennzeichnet, daß das Kühlmedium (19) im Gehäusemantel, der die zu kühlende Innenwand (24) umschließt, in axialer Richtung in gleichbeabstandeten Kühlkanälen (25) strömt, daß jeder Stromfaden des Kühlmediums (19) in jedem Ein- und Austritt des Mantels der Wirbelstromleistungsbremse (1) gleiche Strömungsgeschwindigkeit besitzt, daß das Kühlmedium (19) an einem Ende der Wirbelstromleistungsbremse (1) eintritt und an ihrem anderen Ende aus einer Öffnung (31) austritt, die gegenüber dem Eintritt um im wesentlichen 180° versetzt ist.

2. Wirbelstromleistungsbremse (1) zur Durchführung des Verfahrens nach Anspruch 1, mit Anschlußflanschen für zu untersuchende Kraftmaschinen, mit einer im magnetisierbaren Teil angeordneten Ständerwicklung als Erreger (10) und einem aus magnetisierbarem Material bestehenden Rotor (3) und um den Rotor angeordneten Kühlkanälen sowie einer Kühlmediumzu- und -abführung, dadurch gekennzeichnet, daß an der einen axialen Endebene der Wirbelstromleistungsbremse (1) ein Eintrittsraum (27) und an der anderen axialen Endebene ein Austrittsraum (28) vorgesehen ist, wobei eine Deckfläche jedes Raums (27, 28) durch jeweils eine Stirnwand (32 bzw. 32') des Gehäuses (2) der Wirbelstromleistungsbremse (1) gebildet ist, daß diese Deckflächen (32, 32') mittels im Mantel der Wirbelstromleistungsbremse (1) verlaufender axialer gleichmäßig am Umfang der Räume (27, 28) verteilter Kühlkanäle (25) miteinander verbunden sind, daß die anderen Deckflächen der Räume (27, 28) eine axiale Entfernung zum Gehäuse (2) der Wirbelstromleistungsbremse (1) aufweisen und eine Eintritts- (26) bzw. Austrittsöffnung (29) tragen, daß eine Zylinderwand (34, 34') als äußere Raumbegrenzung sich zwischen den Deckflächen (32, 33 bzw. 32', 33') erstreckt, daß eine einen spiraligen Verlauf aufweisende Innenwand (35, 35') als innere Raumbegrenzung sich zwischen den Deckflächen (32, 33 bzw. 32', 33') erstreckt und daß die Eintritts- (26) bzw. Austrittsöffnung (28) im Bereich des maximalen Abstandes zwischen Zylinderinnendurchmesser und spiraliger Innenwand angeordnet sind und wie diese Bereiche um 180° gegeneinander versetzt sind.

3. Wirbelstromleistungsbremse nach Anspruch 2, dadurch gekennzeichnet, daß der einer Durchtrittsfläche zugrundezulegende lineare Abstand zwischen den Kühlkanalwänden eines Kühlkanals (25) nicht kleiner als 5 % der Länge des Kühlkanals (25) zwischen den beiden Endebenen (32, 32') der Wirbelstromleistungsbremse (1) ist.

4. Wirbelstromleistungsbremse (1) nach Anspruch 2 und/oder 3, dadurch gekennzeichnet, daß die Wanddicke zwischen zylindrischer Innenwand (24) des Innenraums der Wirbelstromleistungsbremse (1) und den Kühlkanälen (25) gleich ist der Wanddicke zwischen den einzelnen in gleichmäßigem Abstand im Mantel der Wirbelstromleistungsbremse (1) angeordneten Kühlkanälen (25).

5. Wirbelstromleistungsbremse nach Anspruch 4, dadurch gekennzeichnet, daß die geraden Kühlkanäle (25) runden Querschnitt besitzen.

6. Wirbelstromleistungsbremse (1) nach einem oder mehreren der Ansprüche 2 - 4, dadurch gekennzeichnet, daß die geraden Kühlkanäle (25) rechteckigen Querschnitt (36) besitzen und daß die größere Seite der zylindrischen Innenwand (24) gegenüberliegt.

7. Wirbelstromleistungsbremse nach Anspruch 6, dadurch gekennzeichnet, daß die minimale radiale Erstreckung der rechteckigen Kühlkanäle (36) in Abhängigkeit der Kühlmittelgeschwindigkeit, bei der noch keine Strömungsablösung an der Wand erfolgt, bestimmt wird.

8. Wirbelstromleistungsbremse nach einem oder mehreren der Ansprüche 2 bis 7, dadurch gekennzeichnet, daß eine von der Wirbelstromleistungsbremse (1) angetriebene Druckerhöhungspumpe für das Kühlmittel vor dem Eintrittsraum (27) vorgesehen ist.

9. Wirbelstromleistungsbremse nach Anspruch 8, dadurch gekennzeichnet, daß die Druckerhöhungspumpe einen regelbaren Eigenantrieb besitzt.

10. Wirbelstromleistungsbremse nach einem oder mehreren der Ansprüche 2 bis 9, dadurch gekennzeichnet, daß in einem Rücklauf zwischen Austrittsraum (29) und Eintrittsraum (27) ein Kühler angeordnet ist.

11. Wirbelstromleistungsbremse nach einem oder mehreren der Ansprüche 2 bis 10, dadurch gekennzeichnet, daß in einem bzw. dem Rücklauf zwischen Austrittsraum (29) und Eintrittsraum (27) ein temperaturgeregelter Ausfluß vorhanden ist.

12. Wirbelstromleistungsbremse nach einem oder mehreren der Ansprüche 2 bis 11, dadurch gekennzeichnet, daß in Abhängigkeit eines Kühlmittelverlustes frisches Kühlmittel vor dem Eintrittsraum (27) eingespeist wird.

13. Wirbelstromleistungsbremse nach einem oder mehreren der Ansprüche 2 bis 12, dadurch gekennzeichnet, daß ein geschlossener Kühlkreislauf vorgesehen ist, dessen Überdruck ein Sieden flüssigen Kühlmittels verhindert.

14. Wirbelstromleistungsbremse nach einem oder mehreren der Ansprüche 2 - 12, dadurch gekennzeichnet, daß bei Verwendung gasförmigen Kühlmittels und geschlossenem Kühlkreislauf eine Einrichtung zur Erhöhung des Systemdrucks vorgesehen ist.

**Claims**

1. A method of cooling the inner wall (24) of a housing of an eddy-current dynamometric brake (1), which wall is heated by eddy-currents, with a cooling medium (19), characterised in that the cooling medium (19) flows in the axial direction, in equally spaced cooling ducts (25), in the housing wall which surrounds the inner wall (24) to be cooled, that each thread of the stream of cooling medium (19) has the same velocity of flow in each inlet and outlet of the wall of the eddy-current dynamometric brake (1), and that the cooling medium (19) enters at one end of the eddy-current dynamometric brake (1) and emerges at its other end from an opening (31) which is offset by substantially 180° in relation to the inlet.

2. An eddy-current dynamometric brake (1) for carrying out the method according to Claim 1, having connection flanges for engines to be examined, having a stator winding disposed in the magnetizable part as an exciter (10) and a rotor (3) consisting of magnetizable material and cooling ducts arranged round the rotor as well as an inlet and an outlet means for the cooling medium, characterised in that provided at the one axial end plane of the eddy-current dynamometric brake (1) is an entrance compartment (27) and at the other axial end plane, an exit compartment (28), a covering surface of each compartment (27, 28) being formed by an end wall (32 or 32') of the housing (2) of the eddy-current dynamometric brake (1) in each case, that these covering surfaces (32, 32') are connected to one another by means of axial cooling ducts (25) which extend in the wall of the eddy-current dynamometric brake (1) and are distributed uniformly at the periphery of the compartments (27, 28), that the other covering surfaces of the compartments (27, 28) are at an axial distance from the housing (2) of the eddg-current dynamometric brake (1) and have an inlet (26) oran outlet (29) respectively, that a cylindrical well (34, 34') extends between the covering surfaces (32, 33 or 32', 33') as an outer boundary of the compartment, that an inner wall (35, 35') having a spiral course extends between the cover surfaces (32, 33 or 32', 33') as an inner boundary of the compartment, and that the inlet (26) and outlet (29) are disposed in the region where there is the maximum spacing between the internal diameter of the cylinder and the spiral inner wall and, like these regions, are offset by 180° in relation to one another.

3. An eddy-current dynamometric brake according to Claim 2, characterised in that the linear distance between the walls of a cooling duct (25), which distance is to form the basis of an area of passage, is not less than 5 % of the length of the cooling duct (25) between the two end planes (32, 32') of the eddy-current dynamometric brake (1).

4. An eddy-current dynamometric brake (1) according to claim 2 and/or 3, characterised in that the wall thickness between cylindrical inner wall (24) of the interior of the eddy-current dynamometric brake (1) and the cooling ducts (25) is equal to the wall thickness between the individual cooling ducts (25) arranged with uniform spacing in the wall of the eddy-current dynamometric brake (1).

5. An eddy-current dynamometric brake according to Claim 4, characterised in that the straight cooling ducts (25) have a round cross-section.

6. An eddy-current dynamometric brake (1) according to any one or more of Claims 2 to 4, characterised in that the straight cooling ducts (25) have a rectangular cross-section (36) and that the larger side is situated opposite the cylindrical inner wall (24).

7. An eddy-current dynamometric brake according to Claim 6, characterised in that the minimum radial extent of the rectangular cooling ducts (36) is determined depending on the velocity of the coolant at which no flow separation yet occurs at the wall.

8. An eddy-current dynamometric brake according to any one or more of Claims 2 to 7, characterised in that a booster pump driven by the eddy-current dynamometric brake (1) is provided for the coolant ahead of the entrance compartment (27).

9. An eddy-current dynamometric brake according to Claim 8, characterised in that the booster pump has its own controllable drive.

10. An eddy-current dynamometric brake according to any one or more of Claims 2 to 9, characterised in that a cooler is disposed in a return flow between exit compartment (29) and entrance compartment (27).

11. An eddy-current dynamometric brake according to any one or more of claims 2 to 10, characterised in that there is a temperature-controlled outflow in a or the return flow between exit compartment (29) and entrance compartment (27).

12. An eddy-current dynamometric brake according to any one or more of Claims 2 to 11, characterised in that fresh coolant is fed in ahead of the entrance compartment (27) depending on a loss of coolant.

13. An eddy-current dynamometric brake according to any one or more of Claims 2 to 12, characterised in that a closed coolant circuit is provided, the excess pressure of which prevents liquid coolant from boiling.

14. An eddy-current dynamometric brake according to any one or more of Claims 2 to 12, characterised in that when a gaseous coolant and a closed coolant circuit are used, a device is provided to increase the pressure of the system.

**Revendications**

1. Procédé pour refroidir une paroi intérieure de carter (24), échauffée par des courants de Foucault, d'un frein dynamométrique à courants de Foucault (1) au moyen d'un fluide de refroidissement (19), caractérisé en ce que le fluide de refroidissement (19) circule dans des conduits de refroidissement (25) disposés à égale distance l'un de l'autre dans le sens axial dans l'enveloppe du carter qui entoure la paroi intérieure (24) à refroidir, en ce que chaque filet de courant du fluide de refroidissement (19) a la même vitesse d'écoulement dans chaque entrée et chaque sortie de l'enveloppe du frein dynamométrique à courants de Foucault (1), et en ce que le fluide de refroidissement entre à une extrémité du frein à courants de Foucault (1) et sort à son autre extrémite par une ouverture (31) décalée de sensibement 180° par rapport à l'entrée.

2. Frein dynamométrique à courants de Foucault (1) pour mettre en oeuvre le procédé de la revendication 1, comportant des brides de raccordement pour les moteurs à contrôler, une bobine de stator en tant qu'excitateur (10) disposé dans la partie magnétisable et un rotor (3) constitué par un matériau magnétisable des conduits de refroidissement disposés autour du rotor et une arrivée et une évacuation du liquide de refroidissement, caractérisé en ce qu'on prévoit sur l'un des plans terminaux axiaux du frein dynamométrique à courants de Foucault (1) une chambre d'entrée (27) et sur l'autre plan terminal axial une chambre de sortie (28), une surface de recouvrement de chaque chambre (27, 28) étant formée respectivement par une paroi frontale (32, 32') du carter (2) du frein dynamométrique à courants de Foucault (1), en ce que ces surfaces de recouvrement (32, 32') sont reliées ensemble au moyen de conduits de refroidissement (25) s'étendant axialement dans l'enveloppe du frein dynamométrique à courants de Foucault (1) et répartis régulièrement sur la périphérie des chambres (27, 28), en ce que les autres surfaces de recouvrement des chambres (27, 28) sont à une certaine distance axiale du carter (2) du frein dynamométrique à courants de Foucault (1) et portent une ouverture d'entrée (26) et une ouverture de sortie (29), en ce qu'une paroi cylindrique (34, 34') s'étend en tant que délimitation spatiale extérieure entre les surfaces de recouvrement (32, 33 et 32', 33'), en ce qu'une proi intérieure (35, 35') ayant une forme spirale s'étend en tant que limitation spatiale intérieure s'étend entre les surfaces frontales et de recouvrement (32, 33 et 32', 33'), et en ce que l'ouverture d'entrée (26) et l'ouverture de sortie (28) sont disposées dans la zone où la distance est maximale entre le diamètre intérieur du cylindre et la paroi intérieure spirale, ces zones étant décalées de 180° l'une par rapport à l'autre.

3. Frein dynamométrique à courants de Foucault selon la revendication 2, caractérisé en ce que la distance linéaire entre les parois d'un conduit de refroidissement (25) qui doit être à la base de l'une des surfaces de passage, n'est pas inférieure à 5 % de la longueur du conduit de refroidissement (25) entre les deux plans terminaux (32, 32') du frein dynamométrique à courants de Foucault (1).

4. Frein dynamométrique à courants de Foucault (1) selon la revendication 2 et/ou 3, caractérisé en ce que l'épaisseur de paroi entre la paroi intérieure cylindrique (24) de la chambre intérieure du frein dynamométrique à courants de Foucault (1) et les conduits de refroidissement (25) est égale à l'épaisseur de paroi entre les conduits de refroidissement (25) individuels disposés à intervalles réguliers dans l'enveloppe du frein dynamométrique à courants de Foucault (1).

5. Frein dynamométrique à courants de Foucault selon la revendication 4, caractérisé en ce que les conduits de refroidissement rectilignes (25) ont une section transversale circulaire.

6. Frein dynamométrique à courants de Foucault (1) selon l'une ou plusieurs des revendications 2 - 4, caractérisé en ce que les conduits de refroidissement (25) ont une section transversale rectangulaire (36) et en ce que le grand côté fait face à la paroi intérieure cylindrique (24).

7. Frein dynamométrique à courants de Foucault selon la revendication 6, caractérisé en ce que la dimension radiale minimale des conduits de refroidissement rectangulaire (36) est déterminée en fonction de la vitesse du fluide de refroidissement à laquelle il ne se produit pas encore de décollement du courant sur la paroi.

8. Frein dynamométrique à courants de Foucault selon l'une ou plusieurs des revendications 2 à 7, caractérisé en ce qu'on prévoit une pompe de surpression pour le fluide de refroidissement avant la chambre d'entrée (27), entrainée par le frein dynamométrique à courants de Foucault (1).

9. Frein dynamométrique à courants de Foucault selon la revendication 8, caractérisé en ce que la pompe de surpression a son propre entraînement réglable.

10. Frein dynamométrique à courants de Foucault selon l'une ou plusieurs des revendications 2 à 9, caractérisé en ce qu'un élément de refroidissement est disposé dans un retour entre la chambre de sortie (29) et la chambre d'entrée (27).

11. Frein dynamométrique à courants de Foucault selon l'une ou plusieurs des revendications 2 à 10, caractérisé en ce qu'on prévoit dans un retour, ou dans le retour entre la chambre de sortie (29) et la chambre d'entrée (27) un écoulement réglé par la température.

12. Frein dynamométrique à courants de Foucault selon l'une ou plusieurs des revendications 2 à 11, caractérisé en ce qu'on introduit du fluide de refroidissement avant la chambre d'entrée (27) en fonction des pertes de fluide de refroidissement.

13. Frein dynamométrique à courants de Foucault selon l'une ou plusieurs des revendications 2 à 12, caractérisé en ce qu'on prévoit un circuit de refroidissement fermé, dont la surpression empêche l'ébullition du fluide de refroidissement liquide.

14. Frein dynamométrique à courants de Foucault selon l'une ou plusieurs des revendications 2 à 12, caractérisé en ce que, lors de l'utilisation d'un fluide de refroidissement gazeux et d'un circuit de refroidissement fermé, on prévoit un dispositif pour augmenter la pression du système.

Fig 1

Fig 2

Fig 3

Fig 4a

Fig 4b

Fig 5